# EUROPEAN PATENT SPECIFICATION

(11) **EP 2 213 523 B1**
(45) Date of publication and mention of the grant of the patent: **20.03.2013**
(21) Application number: 09382011.6
(22) Date of filing: 28.01.2009
(51) Int. Cl.: B60R 21/203, B60R 21/20

(54) **Fixing arrangement with self-centring elements for fixing an airbag module in an automotive vehicle**
Befestigungsanordnung mit selbstzentrierenden Elementen zum Befestigen eines Airbagmoduls in einem Automobil
Agencement de fixation doté d'éléments auto-centrants pour fixer un module d'airbag dans un véhicule automoteur

(43) Date of publication of application: 04.08.2010
(73) Proprietor: Dalphi Metal España, S.A., 28006 Madrid (ES)
(72) Inventor: Garcia Eireos, Fernando José, 36213, Vigo, Pontevedra (ES)
(74) Representative: Elzaburu Marquez, Alberto

(56) References cited:
- EP-A- 1 466 793
- EP-A- 1 514 706
- CH-A- 457 776
- DE-A1-102004 051 434
- US-A- 5 590 900

## Description

### Field of the Invention

The present invention relates to a fixing arrangement for fixing an airbag module in an automotive vehicle and more particularly to a snap-fitting arrangement incorporating self-centring elements.

### Background of the Invention

In the prior art very different types of snap-fitting devices used to fix airbag modules to automotive vehicles are known.

Thus, for example, Spanish Utility Model 1 040 263 of the same applicant as the present invention describes means for snap-fitting the airbag module to the steering wheel consisting on one hand of a spring having one or two fixed points in the casing of the airbag module and on the other hand an insert of the steering wheel which is formed from a body finished in an arrow tip to allow the easy introduction thereof in a receptacle closing said spring and keeping it retained by the horizontal section of the mentioned insert. For its part, the steering wheel includes an access from outside by which, by means of a screwdriver or the like, the resistance of the spring can be overcome and the unblocking of the snap-fitting and therefore the removal of the insert from the receptacle in which it is retained by the spring can be allowed.

For its part, European patent EP 1 179 457 describes means for snap-fitting the airbag module to the steering wheel consisting on one hand of feet integral with the steering wheel and on the other hand of an elastic rod arranged in the casing of the airbag module. Said elastic rod is deformed by means of a suitable tool in order to remove the snap-fitting of the airbag module.

These devices, like many others that could be mentioned, share the basic principles of any snap-fitting device: the interaction of a rigid element with an elastic element (typically a spring) but have different purposes.

For their part, the airbag modules which are assembled in automotive vehicles using snap-fitting devices need specific centring means to achieve that the airbag module is duly placed such that angular and radial clearances causing noises and vibrations do not occur. US 5 590 900 discloses a fixing arrangement according to the preamble of claim 1.

It is known in the state of the art, as per document US 5,590,900, for example, an airbag module in a steering wheel airbag in the pocket of the hub of a vehicle, comprising a moving plate with a plurality of spaced bolt assemblies receivable in a plurality of aligned spaced holes in the pocket, such that these bolt assemblies are non-rotational with respect to the pocket and snap into the holes in a locking relationship. However, this solution needs a complex mounting, and causes noises and vibrations, neither can it be implemented on airbag having a reduced size.

Also known in the art is document DE 10 2004 051 434 A1, describing a centering unit centering an airbag module housing at a steering wheel, comprising a fixing unit arranged as snap-fit in an area of a hub of the steering wheel for fixing the housing on the wheel in a floating manner, by means of a U-shaped contact plate arranged on a side of the housing at a distance from a hinge unit, the hinge unit and the fixing unit being arranged at a distance from each other. However, nor an angular neither a radial self-centring of the of the airbag module is obtained, which causes noises and vibrations.

The automotive industry continuously demands new snap-fitting devices which allow improving the assembly operations which are carried out during the manufacture of the automobiles and this demand is especially intense with regard to the assembly of the airbag modules.

The present invention is aimed at attending to this demand.

### Summary of the Invention

An object of the present invention is to provide a fixing arrangement for fixing by snap-fitting an airbag module in an automotive vehicle which incorporates means ensuring that the airbag module is duly positioned once it is fixed by snap-fitting.

Another object of the present invention is to provide an fixing arrangement for fixing by snap-fitting an airbag module in an automotive vehicle which incorporates means facilitating that the airbag module is fixed to the automotive vehicle such that there are no angular or radial clearances causing noises or vibrations.

These and other objects of the invention are achieved by means of a fixing arrangement for fixing an airbag module in an automotive vehicle by means of cooperating members located therein, the first member comprising at least two snap-fitting hooks and the second member comprising a snap-fitting plate with at least two holes and means for retaining said snap-fitting hooks when they are introduced in said holes in which the snap-fitting hooks and the snap-fitting plate also comprise cooperating means for the self-centring of the airbag module during the operation of fixing in the vehicle.

The end part of said snap-fitting hooks comprises a retention block and a self-centring element arranged on opposite sides in relation to the arm of the snap-fitting hook and the holes of the snap-fitting plate comprise an area sized in correspondence with the self-centring element so that the latter can move inside it. A snap-fitting fixing arrangement is thus achieved which incorporates easily-implemented self-centring means

Said self-centring element is configured by three flexible flanges forming an acute angle with the adjacent surface of the arm of the snap-fitting hook, the end flanges being oriented towards the outside of the arm. A low-cost self-centring element is thus achieved.

In a preferred embodiment of the present invention for driver airbag modules, three snap-fitting hooks and three cooperating areas in the snap-fitting plate separated 120° from one another are used. A very efficient fixing arrangement is thus achieved in this type of airbag module.

Other features and advantages of the present invention will be inferred from the following detailed description of an illustrative, and in no sense limiting, embodiment, of its object in relation to the attached drawings.

### Description of the Drawings

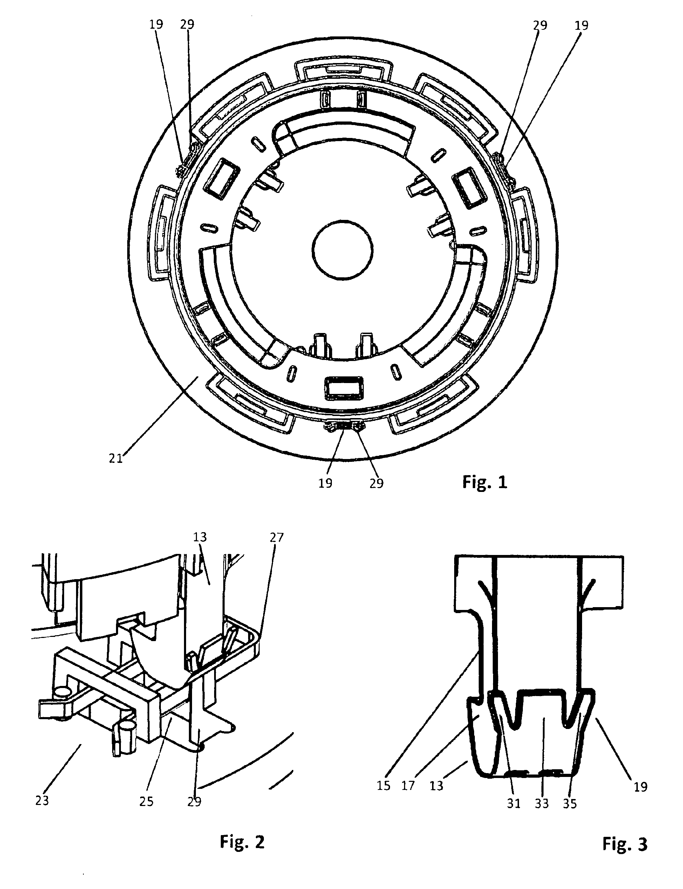

Figure 1 is a schematic plan view of an airbag module assembled in an automotive vehicle using a fixing arrangement according to the present invention.
Figure 2 is a perspective schematic view of a detail of the fixing arrangement for fixing an airbag module in an automotive vehicle according to a preferred embodiment of the present invention.
Figure 3 is a perspective schematic view of the snap-fitting hook used in the fixing arrangement for fixing an airbag module in an automotive vehicle according to a preferred embodiment of the present invention.
Figures 4a and 4b are schematic views of a detail of the fixing arrangement for fixing an airbag module in an automotive vehicle showing the self-centring means which are the specific object of the present invention.
Figure 5 shows the two self-centring directions of the airbag module in the fixing arrangement according to a preferred embodiment of the present invention on the same schematic view shown in Figure 1.

### Detailed Description of the Invention

In the preferred embodiment of the invention which will now be described in detail, the fixing arrangement for fixing the airbag module in the automotive vehicle comprises a first member 11, located in the airbag module, with three snap-fitting hooks 13 and a second member 21, located in the automotive vehicle, formed by a snap-fitting plate 23 with three holes 25 where the snap-fitting hooks 13 must be introduced and be retained therein by means of springs 27.

According to the present invention, the snap-fitting hooks 13 and the snap-fitting plate 23 also comprise cooperating means 19, 29 to facilitate the centring of the airbag module during the operation of fixing which will now be described.

Each snap-fitting hook 13 is formed by an arm 15 and an end part made up of two elements arranged on opposite sides in relation to the arm 15: the block 17 intended to be introduced in the hole of the snap-fitting plate, with the characteristic hook-shaped configuration, and the self-centring element 19 cooperating with an area 29 of the holes 25 of the snap-fitting plate 23.

The self-centring element 19 is configured by three flexible flanges 31, 33, 35 forming an acute angle with the adjacent surface of the arm 15, the end flanges 31, 35 being oriented with an angular movement A with respect to the central flange 33 towards the outside of the arm 15 which, in a preferred embodiment of the invention, would have an acute angle.

For their part, each hole 25 of the snap-fitting plate 23 includes an area 29 sized to cooperate with the self-centring element 19 as is particularly shown in Figures 4a and 4b. The centring element 19 formed by the three flanges 31, 33, 35 comes into contact with the snap-fitting plate 23 in the area 29 of the hole 25 which causes the radial force Fr and the transverse forces Fi and Fd to be exerted thereon, the magnitudes of which forces are related, on one hand, to the flexibility of the flanges 31, 33, 35 and, on the other hand, with the clearance existing between the end part of the arm 15 of the snap-fitting hook 13 and the area 29 of the hole 25.

In Figure 4b it is observed that after the introduction of the snap-fitting hook 13 in the hole 25 the arm 15 of the snap-fitting hook 13 is moved towards the right of the area 29 of the hole 25 which causes the force Fd on the flange 35 to be greater than the force Fi on the flange 31 which, due to the flexibility of the flanges, causes the movement of the hook 13 and therefore of the entire part 11 until reaching the centred position depicted in Figure 4a in which the forces Fi and Fd are balanced.

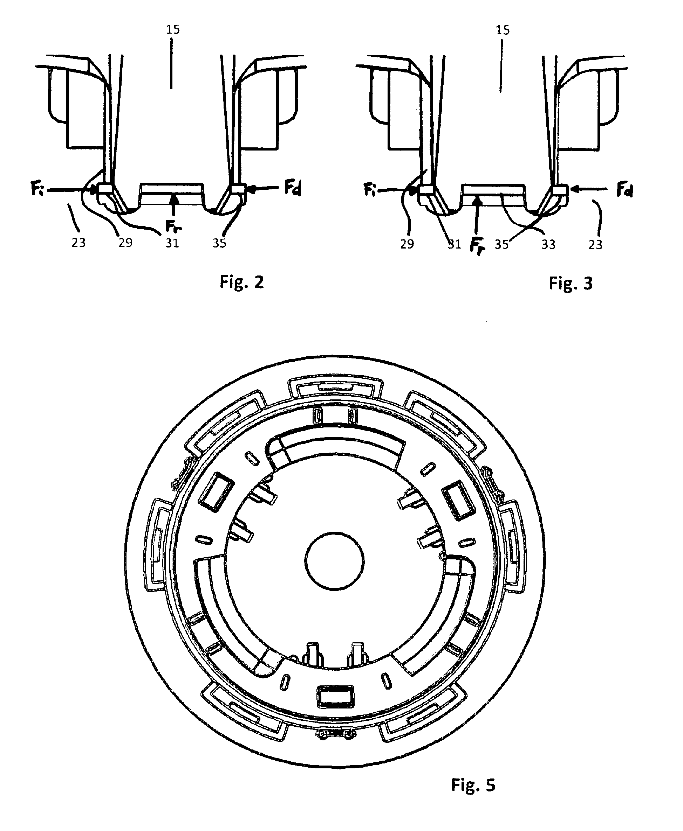

Figure 5 depicts the forces acting on the three snap-fitting hooks 13 and it can be observed that the self-centring of the airbag module in the radial direction is achieved by means of the effect of the three radial forces Fr and the angular self-centring is achieved by means of the effect of the three pairs of forces Fi, Fd.

Since the flanges 31, 33, 35 are flexible the greater the initial decentring in one direction, the greater the force that they exert to cause the centring will be.

The snap-fitting fixing arrangement object of the present invention therefore includes means for achieving the self-centring by incorporating these two functions in a single element. This is especially of interest for small-sized airbag modules and, particularly, for driver airbag modules.

An additional advantage of the present invention is that as a result of the contact of the snap-fitting hooks with the snap-fitting plate they are forced to work almost exclusively under traction during the explosion of the airbag module preventing the additional work under flexion which takes place when there are clearances between both elements, therefore this new type of snap-fitting hook has a greater mechanical resistance.

As the person skilled in the art will well understand, the fixing arrangement object of the present invention is applicable both when the first member 11 is located in the airbag module and the second member 21 is located in the automotive vehicle and when the first member 11 is located in the automotive vehicle and the second member 21 is located in the airbag module.

## Claims

1. A fixing arrangement for fixing an airbag module in an automotive vehicle by means of cooperating members (11, 21) located therein, the first member (11) comprising at least two snap-fitting hooks (13) and the second member (21) comprising a snap-fitting plate (23) with at least two holes (25) and means for retaining said snap-fitting hooks (13) when they are introduced in said holes (25), the snap-fitting hooks (13) and the snap-fitting plate (23) also comprising cooperating means (19, 29) for the self-centring of the airbag module during the operation of fixing in the vehicle, each of the snap fitting hooks (13) comprising an arm (15), **characterised in that** the end part of said snap-fitting hooks (13) comprises a retention block (17) and a self-centring element (19) arranged on opposite sides in relation to the arm (15) of the snap-fitting hook (13), the holes (25) of the snap-fitting plate (23) comprising an area (29) sized in correspondence with the self-centring element (19) so that the latter can move inside it, said self-centring element (19) being configured by three flexible flanges (31, 33, 35) forming an acute angle with the adjacent surface of the arm (15), the end flanges (31, 35) being oriented towards the outside of the arm (15).

2. The fixing arrangement for fixing an airbag module in an automotive vehicle according to claim 1, **characterised in that** the axis of the end flanges (31, 35) forms an acute angle A with the axis of the central flange (33).

3. The fixing arrangement for fixing an airbag module in an automotive vehicle according to any of claim 1-2, **characterised in that** it comprises three snap-fitting hooks (13) for snap-fitting with said self-centring elements (19) and three areas (29) in the snap-fitting plate (23) cooperating with them, said hooks (13) and said areas (29) being located at an angular distance of 120° from one another.

4. The fixing arrangement for fixing an airbag module in an automotive vehicle according to any of claim 1-3, **characterised in that** said airbag module is a driver airbag module.

5. The fixing arrangement for fixing an airbag module in an automotive vehicle according to any of claims 1-4, **characterised in that** said first member (11) is located in the airbag module and said second member (21) is located in the automotive vehicle.

6. The fixing arrangement for fixing an airbag module in an automotive vehicle according to any of claims 1-4, **characterised in that** said first member (11) is located in the automotive vehicle and said second member (21) is located in the airbag module.

## Patentansprüche

1. Befestigungsanordnung zur Befestigung eines Airbagmoduls in einem Automobil bzw. Kraftfahrzeug mit Hilfe darin angeordneter zusammenwirkender Elemente (11, 21), wobei das erste Element (11) wenigstens zwei Schnappverschlusshaken (13) umfasst, und das zweite Element (21) eine Schnappverschlussplatte (23) mit wenigstens zwei Löchern und Mitteln zum Festhalten der Schnappverschlusshaken (13) umfasst, wenn diese in die Löcher (25) eingeführt sind, wobei die Schnappverschlusshaken (13) und die Schnappverschlussplatte (23) auch zusammenwirkende Mittel (19, 29) für das Selbstzentrieren des Airbagmoduls während des Befestigungsarbeitsgangs in dem Fahrzeug umfassen, wobei jeder der Schnappverschlusshaken (13) einen Arm (15) umfasst, **dadurch gekennzeichnet, dass** der Endteil der Schnappverschlusshaken (13) einen Rückhalteblock (17) und ein selbstzentrierendes Element (19) umfasst, die auf entgegengesetzten Seiten in Bezug auf den Arm (15) des Schnappverschlusshakens (13) angeordnet sind, wobei die Löcher (25) der Schnappverschlussplatte (23) einen Bereich (29) umfassen, der entsprechend dem selbstzentrierenden Element (19) dimensioniert ist, so dass das Letztere sich in ihrem Inneren bewegen kann, wobei das selbstzentrierende Element (19) durch drei flexible Flansche (31, 33, 35) aufgebaut ist, die einen spitzen Winkel mit der benachbarten Oberfläche des Arms (15) bilden, wobei die Endflansche (31, 35) in Richtung der Außenseite des Arms (15) orientiert sind.

2. Befestigungsanordnung zur Befestigung eines Airbagmoduls in einem Kraftfahrzeug nach Anspruch 1, **dadurch gekennzeichnet, dass** die Achse der Endflansche (31, 35) mit der Achse des mittleren Flansches (33) einen spitzen Winkel A bildet.

3. Befestigungsanordnung zur Befestigung eines Airbagmoduls in einem Kraftfahrzeug nach einem der Ansprüche 1 - 2, **dadurch gekennzeichnet, dass** sie drei Schnappverschlusshaken (13) zum Schnappverschließen mit den selbstzentrierenden Elementen (1-9) und drei Bereiche (29) in der Schnappverschlussplatte (23), die mit ihnen zusammenwirken, umfasst, wobei die Haken (13) und die Bereiche (29) in einem Winkelabstand von 120° voneinander angeordnet sind.

4. Befestigungsanordnung zur Befestigung eines Airbagmoduls in einem Kraftfahrzeug nach einem der Ansprüche 1 - 3, **dadurch gekennzeichnet, dass** das Airbagmodul ein Fahrerairbagmodul ist.

5. Befestigungsanordnung zur Befestigung eines Airbagmoduls in einem Kraftfahrzeug nach einem der Ansprüche 1 - 4, **dadurch gekennzeichnet, dass** das erste Element (11) in dem Airbagmodul angeordnet ist und das zweite Element (21) in dem Kraftfahrzeug angeordnet ist.

6. Befestigungsanordnung zur Befestigung eines Airbagmoduls in einem Kraftfahrzeug nach einem der Ansprüche 1 - 4, **dadurch gekennzeichnet, dass** das erste Element (11) in dem Kraftfahrzeug angeordnet ist und das zweite Element (21) in dem Airbagmodul angeordnet ist.

## Revendications

1. Agencement de fixation pour fixer un module d'airbag dans un véhicule automoteur au moyen d'éléments de coopération (11, 21) positionnés à l'intérieur de ce dernier, le premier élément (11) comprenant au moins deux crochets à encliquetage (13) et le second élément (21) comprenant un plaque à encliquetage (23) avec au moins deux trous (25) et des moyens pour retenir lesdits crochets à encliquetage (13) lorsqu'ils sont introduits dans lesdits trous (25), les crochets à encliquetage (13) et à la plaque à encliquetage (23) comprenant également des moyens de coopération (19, 29) pour l'auto-centrage du module d'airbag pendant l'opération de fixation dans le véhicule, chacun des crochets à encliquetage (13) comprenant un bras (15), **caractérisé en ce que** la partie d'extrémité desdits crochets à encliquetage (13) comprend un bloc de retenue (17) et un élément auto-centrant (19) agencés sur des côtés opposés par rapport au bras (15) du crochet à encliquetage (13), les trous (25) de la plaque à encliquetage (23) comprenant une zone (29) dimensionnée en correspondance avec l'élément auto-centrant (19) de sorte que ce dernier peut s'y déplacer à l'intérieur, ledit élément auto-centrant (19) étant configuré par trois rebords flexibles (31, 33, 35) formant un angle aigu avec la surface adjacente du bras (15), les rebords d'extrémité (31, 35) étant orientés vers l'extérieur du bras (15).

2. Agencement de fixation pour fixer un module d'airbag dans un véhicule automoteur selon la revendication 1, **caractérisé en ce que** l'axe des rebords d'extrémité (31, 35) forme un angle aigu A avec l'axe du rebord central (33).

3. Agencement de fixation pour fixer un module d'airbag dans un véhicule automoteur selon l'une quelconque des revendications 1 à 2, **caractérisé en ce qu'**il comprend trois crochets à encliquetage (13) pour s'encliqueter avec lesdits éléments auto-centrants (19) et trois zones (29) dans la plaque à encliquetage (23) coopérant avec eux, lesdits crochets (13) et lesdites zones (29) étant positionnés à une distance angulaire de 120° les uns par rapport aux autres.

4. Agencement de fixation pour fixer un module d'airbag dans un véhicule automoteur selon l'une quelconque des revendications 1 à 3, **caractérisé en ce que** ledit module d'airbag est un module d'airbag pour conducteur.

5. Agencement de fixation pour fixer un module d'airbag dans un véhicule automoteur selon l'une quelconque des revendications 1 à 4, **caractérisé en ce que** ledit premier élément (11) est positionné dans le module d'airbag et ledit second élément (21) est positionné dans le véhicule automoteur.

6. Agencement de fixation pour fixer un module d'airbag dans un véhicule automoteur selon l'une quelconque des revendications 1 à 4, **caractérisé en ce que** ledit premier élément (11) est positionné dans le véhicule automoteur et ledit second élément (21) est positionné dans le module d'airbag.
